# FASCICULE DE BREVET EUROPEEN

(11) **EP 4 462 194 B1**
(45) Date de publication et mention de la délivrance du brevet: **02.12.2026**
(21) Numéro de dépôt: 23172343.8
(22) Date de dépôt: 09.05.2023
(51) Int. Cl.: G04D 5/00, F16N 19/00

(54) **DISPOSITIF DE CONDITIONNEMENT D'UN LUBRIFIANT POUR PIÈCES D'HORLOGERIE**
VORRICHTUNG ZUR KONDITIONIERUNG EINES SCHMIERMITTELS FÜR UHREN
DEVICE FOR CONDITIONING A LUBRICANT FOR TIMEPIECES

(43) Date de publication de la demande: 13.11.2024
(73) Titulaire: The Swatch Group Research and Development Ltd, 2074 Marin (CH)
(72) Inventeur: DINH, Jean-Bosco Thanh Khai, 1700 Fribourg (CH); MOSTEIRO VAZQUEZ, Yoann, 1587 Montmagny (CH); DESPLAND, Romain, 1700 Fribourg (CH)
(74) Mandataire: ICB SA

(56) Documents cités:
- EP-A1- 2 947 524
- CH-A- 239 788
- CH-A- 440 149
- US-A- 2 643 801

## Description

### Domaine technique de l'invention

L'invention concerne un dispositif de conditionnement d'un lubrifiant pour des pièces d'horlogerie.

L'invention concerne le domaine des outillages pour la mécanique fine, et notamment des outillages pour horloger, et plus particulièrement pour les tâches de lubrification de montres ou de pièces d'horlogerie.

### Arrière-plan technologique

La lubrification d'une pièce d'horlogerie est une opération essentielle, pour laquelle il existe peu d'outillage, hormis l'huileur automatique et l'huilier, et des moyens de conditionnement pour les différentes huiles utilisées. Cependant, certains outils tels que les moyens de conditionnement ne sont pas adaptés aux besoins des horlogers, notamment par rapport à la quantité des flacons de conditionnement et la quantité utilisée par les horlogers.

Les moyens de conditionnement utilisés dans l'art antérieur comprennent généralement un volume de lubrifiant trop important pour l'opérateur, le lubrifiant restant alors pendant des périodes prolongées dans le flacon. Il en résulte un stockage qui n'est pas optimal et une dégradation des propriétés du lubrifiant au cours du temps une fois le flacon ouvert, et implicitement une perte lorsque le lubrifiant restant dans le flacon n'est plus utilisable et doit être jeté. De plus, pour prélever de petite quantité dans le flacon, l'horloger peut utiliser un tournevis ce qui peut amener à une contamination du lubrifiant dans le flacon et augmenter la vitesse de dégradation du lubrifiant.

Le document CH 239 788 A divulgue un outil d'huilage horloger avec réservoir en ampoule et tube capillaire d'écoulement.

### Résumé de l'invention

L'invention a notamment pour objectif de pallier les différents inconvénients de l'art antérieur.

Plus précisément, un objectif de l'invention est de fournir un dispositif de conditionnement d'un lubrifiant pour les interventions de l'horloger pour lequel il n'existe pas de bonne solution compacte permettant l'emport sécurisé d'huile propre, facilement identifiable sans risque de confusion, tout en limitant au maximum la dégradation du lubrifiant au cours du temps.

Aussi l'invention propose la mise à disposition de l'horloger d'un dispositif de conditionnement d'un lubrifiant de très faible volume.

A cet effet, l'invention concerne un dispositif de conditionnement pour un lubrifiant, le dispositif comprenant un tube capillaire creux destiné à contenir du lubrifiant, le tube comprenant d'une part une première ouverture obturée par un piston agencé pour coopérer avec une tige mobile longitudinalement dans le tube capillaire, et d'autre part, une seconde ouverture libre par laquelle le lubrifiant s'écoule lorsqu'une pression est exercée sur le piston au moyen de la tige mobile.

Conformément à d'autres variantes avantageuses de l'invention :
- le tube capillaire est en verre ;
- le piston est réalisé à partir d'une cire ;
- la tige mobile est réalisée en matière plastique ;
- le tube capillaire présente une longueur comprise entre 20mm et 150mm ;
- le tube capillaire présente un diamètre interne compris entre 0.6mm et 2mm ;
- le tube capillaire comprend un détrompeur coloré ;
- la longueur du capillaire est supérieure à la somme de la longueur de la tige et de la longueur du piston.

L'invention concerne aussi un kit de lubrification comprenant un dispositif de conditionnement pour un lubrifiant selon l'invention, et des bouchons disposés à chacune des ouvertures du tube capillaire pour maintenir le tube capillaire étanche lors de son transport.

L'invention concerne également un procédé de remplissage d'un tube capillaire d'un dispositif de conditionnement pour un lubrifiant selon l'invention, comprenant les étapes suivantes :
- fournir un tube capillaire avec des première et une deuxième ouvertures ;
- former un détrompeur coloré à proximité de la première ouverture ;
- déposer entre 0.02ml et 0.1ml de lubrifiant dans le tube capillaire par la première ouverture ;
- insérer un piston au niveau de la première ouverture du tube capillaire ;
- optionnellement, placer un bouchon sur les première et seconde ouvertures du tube capillaire.

### Brève description des figures

D'autres caractéristiques et avantages de l'invention apparaîtront à la lecture de la description détaillée suivante donnée à titre d'exemple nullement limitatif, en référence aux dessins annexés dans lesquels :
- la figure 1 représente une vue de dessus d'un tube capillaire d'un dispositif de conditionnement selon l'invention ;
- la figure 2 représente une vue de dessus d'un dispositif de conditionnement utilisé selon l'invention ;
- la figure 3 représente une vue en coupe d'un tube capillaire d'un dispositif de conditionnement selon l'invention ;
- la figure 4 représente une vue d'un kit de conditionnement d'un dispositif selon l'invention.

### Description détaillée de l'invention

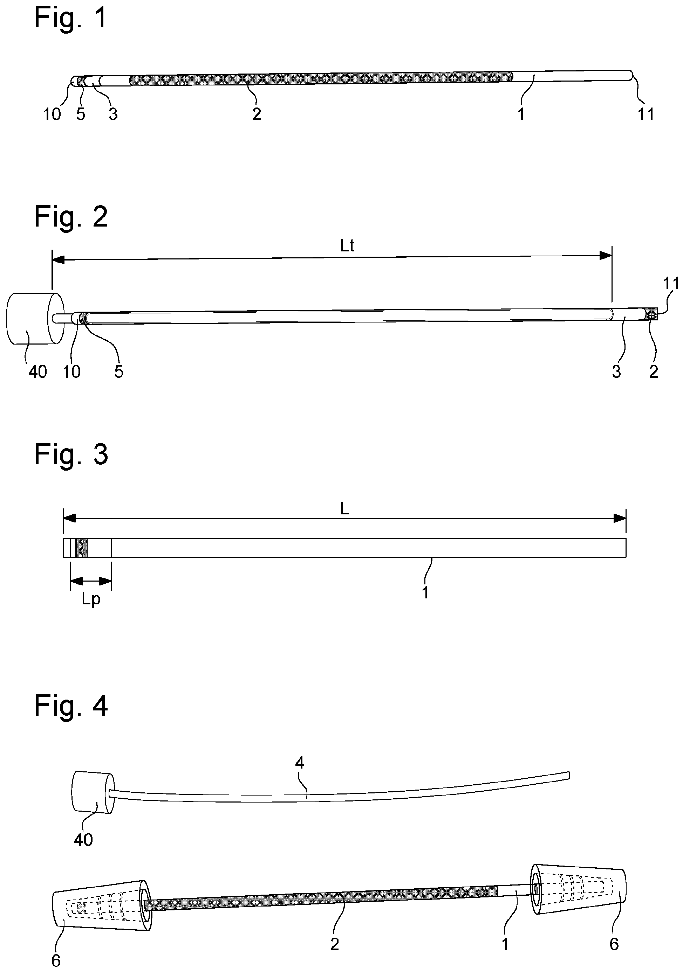

La figure 1 illustre une représentation schématique de dessus d'un dispositif de conditionnement selon l'invention.

Tel que représenté sur la figure 1, le dispositif de conditionnement pour un lubrifiant 2 comprend un tube capillaire creux 1 destiné à contenir un lubrifiant 2. Le tube 1 comprend d'une part une première ouverture 10 obturée par un piston 3, et d'autre part, une seconde ouverture 11 libre par laquelle le lubrifiant 2 s'écoule. Le piston 3 est agencé pour coopérer avec une tige 4 mobile longitudinalement dans le tube capillaire 1 pour permettre l'évacuation du lubrifiant 2 par la seconde ouverture 11 libre lorsqu'une pression est exercée sur le piston 3 au moyen de la tige 4.

Le lubrifiant 2 contenu dans le dispositif de conditionnement peut aussi bien être une huile ou une graisse.

Le tube capillaire 1 recevant le lubrifiant 2 est réalisé en verre. Une telle matière permet d'avoir un dispositif de conditionnement inerte vis-à-vis du lubrifiant 2 contenu dans le tube 1.

Le piston 3, quant à lui, est réalisé à partir d'une cire synthétique ou naturelle ou bien d'un matériau polymère. Le piston 3 doit occuper le volume du tube dans lequel il est placé de manière à empêcher le lubrifiant 2 de passer derrière le piston 3 lorsqu'une pression est exercée sur ce dernier. De plus, un tel piston permet de garantir que le tube ne sera ouvert et utilisé qu'une seule fois.

Selon l'invention, la tige 4 est réalisée à partir d'une matière plastique. Cette dernière doit être suffisamment rigide pour pouvoir exercée une pression suffisante sur le piston 3. Pour faciliter la manipulation de la tige 4, cette dernière présente une tête 40 plus large que la tige 4. Contrairement au tube capillaire 1, la tige 4 peut être réutilisée avec d'autres tubes par la suite.

La longueur du tube capillaire 1 est comprise entre 20mm et 150mm, et le diamètre interne du tube compris entre 0.6mm et 2mm. De telles dimensions permettent de loger entre 0.02ml et 0.1ml de lubrifiant dans le tube capillaire1, soit une quantité largement inférieure à celle des flacons habituellement utilisés qui contiennent 2ml. On comprend donc que le très faible volume présent dans le tube 1 permet d'utiliser tout le lubrifiant présent dans un laps de temps relativement court et sans que le lubrifiant ne perde de ses qualités/propriétés.

Selon l'invention, le tube capillaire comprend un détrompeur 5 coloré à proximité de la première ouverture 10. Le détrompeur 5 permet à l'opérateur de repérer rapidement où se situe le piston 3 et ainsi placer le tube 1 dans le bon sens directement.

Il est également possible de colorer le lubrifiant 2 pour aider l'opérateur à déterminer le bon lubrifiant à utiliser. En effet, de nombreuses huiles ou graisses lubrifiantes sont utilisées par les horlogers ou les opérateurs lors du montage et de l'entretien des pièces d'horlogerie, chaque huile possédant des propriétés particulières en fonction de l'endroit où elle est déposée dans la pièce d'horlogerie. Il est donc intéressant pour l'horloger ou l'opérateur de pouvoir identifier la catégorie de lubrifiant à utiliser rapidement via un code couleur. Ainsi le lubrifiant peut être coloré en vert, bleu, violet ou encore rouge pour identifier rapidement et visuellement la catégorie de lubrifiant à utiliser.

Selon un aspect particulièrement avantageux de l'invention, la longueur L du tube capillaire 1 est supérieure à la somme de la longueur Lt de la tige 4 et de la longueur Lp du piston 3. Un tel agencement permet de s'assurer que le lubrifiant 2 est extrait sur la quasi-totalité du tube capillaire 1, en laissant une infime partie du lubrifiant 2 sur le dernier millimètre du tube 1 pour éviter d'utiliser du lubrifiant potentiellement contaminé par le piston en cire.

Ainsi grâce à ces caractéristiques, il est possible d'obtenir un dispositif de conditionnement de très faible volume pour un lubrifiant 2 présentant une construction peu encombrante et permettant d'utiliser l'huile dans un laps de temps relativement court pour éviter que cette dernière ne se dégrade au court du temps.

L'invention concerne également un kit de conditionnement comprenant un dispositif de conditionnement selon l'invention, ainsi que des bouchons 6 disposés à chacune des ouvertures du tube capillaire 1 pour maintenir le tube capillaire étanche lors de son transport.

Ainsi, le dispositif peut être commercialisé en paquet de dix dispositifs ou plus. La séparation du lubrifiant en si petites quantités permet à la fois de faciliter la dépose du lubrifiant dans l'huilier, d'éviter une contamination (par exemple utiliser un tournevis pour prendre du lubrifiant depuis un flacon), et d'assurer une fraicheur du lubrifiant (éviter de garder un flacon déjà ouvert pendant plusieurs années).

Grâce à un tel dispositif, l'horloger extrait la totalité du lubrifiant dans un huilier à chaque fois qu'un tube capillaire est ouvert et utilise cette quantité avec un pique huile dans le courant de la semaine. L'horloger peut alors utiliser un nouveau capillaire chaque semaine et travailler avec un lubrifiant ayant préservé toutes ses qualités.

L'invention concerne également un procédé de remplissage d'un tube capillaire 1 d'un dispositif de conditionnement selon l'invention, comprenant les étapes suivantes :
- fournir un tube capillaire 1 avec une première ouverture 10 et une deuxième ouverture 11 ;
- former un détrompeur 5 coloré à proximité de la première ouverture 10 ;
- déposer entre 0.02ml et 0.1ml dans le tube capillaire 1 par la première ouverture ;
- insérer un piston 3 par la première ouverture 10 du tube capillaire 1 ;
- optionnellement, placer un bouchon 6 dans les première et deuxième ouvertures 10, 11.

## Revendications

1. Dispositif de conditionnement pour un lubrifiant, comprenant un tube capillaire creux (1) destiné à contenir le lubrifiant (2), le tube comprenant d'une part une première ouverture (10) obturée par un piston (3) agencé pour coopérer avec une tige (4) mobile longitudinalement dans le tube capillaire (1), et d'autre part, une seconde ouverture (11) libre par laquelle le lubrifiant (2) s'écoule lorsqu'une pression est exercée sur le piston (3) au moyen de la tige (4).

2. Dispositif de conditionnement selon la revendication 1, dans lequel le tube capillaire (1) est en verre.

3. Dispositif de conditionnement selon la revendication 1 ou 2, dans lequel le piston (3) est réalisé à partir d'une cire ou d'un matériau polymère.

4. Dispositif de conditionnement selon l'une des revendications 1 à 3, dans lequel la tige mobile (4) est réalisée en matière plastique.

5. Dispositif de conditionnement selon l'une des revendications 1 à 4, dans lequel le tube capillaire (1) présente une longueur comprise entre 20mm et 150mm.

6. Dispositif de conditionnement selon l'une des revendications 1 à 5, dans lequel le tube capillaire (1) présente un diamètre interne compris entre 0.6mm et 2mm.

7. Dispositif de conditionnement selon l'une des revendications 1 à 6, dans lequel le tube capillaire (1) comprend un détrompeur (5) coloré.

8. Dispositif de conditionnement selon l'une des revendications 1 à 7, dans lequel la longueur (L) du tube capillaire (1) est supérieure à la somme de la longueur (It) de la tige (4) et de la longueur (lp) du piston (3).

9. Kit de conditionnement comprenant un dispositif de conditionnement
selon l'une des revendications 1 à 8, et des bouchons (6) disposés à
chacune des ouvertures (10, 11) du tube capillaire (1) pour maintenir le tube capillaire (1) étanche lors de son transport.

10. Procédé de remplissage d'un tube capillaire (1) d'un dispositif de conditionnement selon l'une des revendications 1 à 8, comprenant les étapes suivantes :
- fournir un tube capillaire (1) avec une première ouverture (10) et une deuxième ouverture (11) ;
- former un détrompeur (5) coloré à proximité de la première ouverture (10) ;
- déposer entre 0.02ml et 0.1ml d'un lubrifiant (2) dans le tube capillaire (1) par la première ouverture (10) ;
- insérer un piston (3) par la première ouverture (10) du tube capillaire (1) ;
- optionnellement, placer un bouchon (6) sur les première et seconde ouvertures (10, 11) du tube capillaire (1).

## Patentansprüche

1. Verpackungsvorrichtung für ein Schmiermittel, umfassend ein hohles Kapillarrohr (1), das zur Aufnahme des Schmiermittels (2) bestimmt ist, wobei das Rohr einerseits eine erste Öffnung (10) umfasst, die durch einen Kolben (3) verschlossen ist, der dazu eingerichtet ist, mit einer in dem Kapillarrohr (1) längsbeweglichen Stange (4) zusammenzuwirken, und andererseits eine freie zweite Öffnung (11), durch die das Schmiermittel (2) ausströmt, wenn mittels der Stange (4) ein Druck auf den Kolben (3) ausgeübt wird.

2. Verpackungsvorrichtung nach Anspruch 1, wobei das Kapillarrohr (1) aus Glas besteht.

3. Verpackungsvorrichtung nach Anspruch 1 oder 2, wobei der Kolben (3) aus einem Wachs oder einem Polymermaterial hergestellt ist.

4. Verpackungsvorrichtung nach einem der Ansprüche 1 bis 3, wobei die bewegliche Stange (4) aus Kunststoff hergestellt ist.

5. Verpackungsvorrichtung nach einem der Ansprüche 1 bis 4, wobei das Kapillarrohr (1) eine Länge von 20 mm bis 150 mm aufweist.

6. Verpackungsvorrichtung nach einem der Ansprüche 1 bis 5, wobei das Kapillarrohr (1) einen Innendurchmesser von 0,6 mm bis 2 mm aufweist.

7. Verpackungsvorrichtung nach einem der Ansprüche 1 bis 6, wobei das Kapillarrohr (1) ein farbiges Verwechslungssicherungselement (5) umfasst.

8. Verpackungsvorrichtung nach einem der Ansprüche 1 bis 7, wobei die Länge (L) des Kapillarrohrs (1) größer ist als die Summe aus der Länge (It) der Stange (4) und der Länge (Ip) des Kolbens (3).

9. Verpackungskit, umfassend eine Verpackungsvorrichtung nach einem der Ansprüche 1 bis 8 und Verschlüsse (6), die an
jeder der Öffnungen (10, 11) des Kapillarrohrs (1) angeordnet sind, um das
Kapillarrohr (1) während seines Transports dicht zu halten.

10. Verfahren zum Befüllen eines Kapillarrohrs (1) einer Verpackungsvorrichtung nach einem der Ansprüche 1 bis 8, umfassend die folgenden Schritte:
- Bereitstellen eines Kapillarrohrs (1) mit einer ersten Öffnung (10) und einer zweiten Öffnung (11);
- Ausbilden eines farbigen Verwechslungssicherungselements (5) in der Nähe der ersten Öffnung (10);
- Einbringen von 0,02 ml bis 0,1 ml eines Schmiermittels (2) durch die erste Öffnung (10) in das Kapillarrohr (1);
- Einführen eines Kolbens (3) durch die erste Öffnung (10) des Kapillarrohrs (1);
- gegebenenfalls Anbringen eines Verschlusses (6) an der ersten und der zweiten Öffnung (10, 11) des Kapillarrohrs (1).

## Claims

1. A device for packaging a lubricant, comprising a hollow capillary tube (1) intended to contain the lubricant (2), the tube comprising, on the one hand, a first opening (10) closed by a piston (3) arranged to cooperate with a rod (4) movable longitudinally in the capillary tube (1), and on the other hand, a second free opening (11) through which the lubricant (2) flows when pressure is exerted on the piston (3) by means of the rod (4).

2. The packaging device according to claim 1, wherein the capillary tube (1) is made of glass.

3. The packaging device according to claim 1 or 2, wherein the piston (3) is made from a wax or a polymer material.

4. The packaging device according to one of claims 1 to 3, wherein the movable rod (4) is made of plastic material.

5. The packaging device according to one of claims 1 to 4, wherein the capillary tube (1) has a length comprised between 20mm and 150mm.

6. The packaging device according to one of claims 1 to 5, wherein the capillary tube (1) has an internal diameter comprised between 0.6 mm and 2 mm.

7. The packaging device according to one of claims 1 to 6, wherein the capillary tube (1) comprises a coloured locator (5).

8. The packaging device according to one of claims 1 to 7, wherein the length (L) of the capillary tube (1) is greater than the sum of the length (lt) of the rod (4) and the length (lp) of the piston (3).

9. A packaging kit comprising a packaging device according to one of claims 1 to 8, and plugs (6) disposed at each of the openings (10, 11) of the capillary tube (1) to keep the capillary tube (1) sealed during transport.

10. A method for filling a capillary tube (1) of a packaging device according to one of claims 1 to 8, comprising the following steps:
- providing a capillary tube (1) with a first opening (10) and a second opening (11).
- forming a coloured locator (5) close to the first opening (10);
- depositing between 0.02ml and 0.1ml of lubricant (2) in the capillary tube (1) through the first opening (10);
- inserting a piston (3) through the first opening (10) of the capillary tube (1);
- optionally, placing a plug (6) over the first and second openings (10, 11) of the capillary tube (1).
